# EUROPÄISCHE PATENTANMELDUNG

(11) **EP 1 602 867 A1**
(43) Veröffentlichungstag der Anmeldung: **07.12.2005**
(21) Anmeldenummer: 05006360.1
(22) Anmeldetag: 23.03.2005
(51) Int. Cl.: F16K 24/04

(54) **Entlüftungsventil für den Einsatz in Streckblasmaschinen**

(30) Priorität: 01.06.2004 CH 9222004
(71) Anmelder: EUGEN SEITZ AG, CH-8623 Wetzikon (CH)
(72) Erfinder: Rymann, Othmar, 8362 Balterswil (CH)
(74) Vertreter: Troesch Scheidegger Werner AG

(57) **Zusammenfassung**

Das erfindungsgemässe Entlüftungsventil für den Einsatz in Streckblasmaschinen für die Fertigung von Hohlkörpern aus Kunststoff, weist einen axial in einem Ventilgehäuse (1) zwischen einer geschlossenen und offenen Stellung verschiebbar angeordneten Ventilkörper (2), einen eine Speisedruckleitung (8) und eine Entlüftungsleitung (10) verbindenden Verbindungsraum (9), dessen Verbindung durch den Ventilkörper (2) in seiner geschlossenen Stellung geschlossen ist, und eine Steuerdruckkammer (6) auf. Der Ventilkörper (2) ist aus einem Schliesskolben (3) und einem damit starr verbundenen Gegenkolben (4) gebildet. Dabei steht die eine erste Stirnseite des Ventilkörpers (2) bildende Wirkfläche (3') des Schliesskolbens (3) mit der Steuerdruckkammer (6) in Verbindung, und zwischen dem Schliesskolben (3) und dem Gegenkolben (4) ist ein Schliessteller (5) ausgebildet, welcher den Verbindungsraum (9) in geschlossener Stellung des Ventilkörpers (2) schliesst. Weiter ist die Wirkfläche (4') des in den mit der Speisedruckleitung (8) in Verbindung stehenden Bereiches (9') des Verbindungsraums (9) mündenden Teils des Gegenkolbens (4) kleiner als die Wirkfläche (5') des zum Gegenkolben (4) gerichteten Teils des Schliesstellers (4) in geschlossenem Zustand des Ventilkörpers (2), und die die genannte erste Stirnseite des Ventilkörpers (2) bildende Wirkfläche (3') des Steuerkolbens (3) ist grösser als die genannte Wirkfläche (5') des Schliesstellers (5).

## Beschreibung

Die vorliegende Erfindung betrifft ein Entlüftungsventil nach dem Oberbegriff von Anspruch 1.

Für die Erzeugung von Kunststoffflaschen, insbesondere von PET-Flaschen, wird ein Rohling oder Vorformling in der Fertigungsmaschine in einer Form in der Regel in zwei Schritten in seine endgültige Form aufgeblasen. Hierfür weist der Rohling bereits im Wesentlichen den fertigen Flaschenkopf auf, welcher in der Blasform der Fertigungsmaschine gehalten und mit einer Luftzufuhrleitung verbunden wird. Durch Einblasen von Luft durch den Flaschenkopf wird der Rohling aufgeblasen und schliesslich in seine endgültige Form gebracht.

Dies erfolgt vorteilhaft in einem zweistufigen Verfahren, wobei zuerst mit einem Druckwert zwischen 6 bis 20 bar vorgeblasen wird und danach das Fertigblasen mit einem Druckwert von 30 bis 40 bar erfolgt.

Um eine wirtschaftliche Produktion zu gewährleisten müssen diese Prozesse so rasch als möglich ablaufen. Hierfür wird herkömmlicherweise eine Ventilanordnung bestehend aus zwei Ventilen eingesetzt, einem Vorblasventil und einem Blasventil, welche meistens auf einem gemeinsamen Block angeordnet sind.

Am Ende des Blasprozesses, d.h. wenn der Rohling zur fertigen Flasche aufgeblasen ist, muss der immer noch herrschende Druck entlüftet werden, damit die Flasche aus der Fertigungsmaschine entfernt werden kann. Dieser Entlüftungsvorgang soll möglichst schnell ablaufen, um die für diesen Vorgang notwendige Zeit möglichst gering zu halten, da diese Zeit die Gesamtprozesszeit beeinflusst.

Der Entlüftungsvorgang wird analog der Luftzufuhr über ein spezielles Entlüftungsventil ausgeführt, welches häufig zusammen mit den Blasventilen in einer gemeinsamen Ventilanordnung resp. einem Ventilblock angeordnet ist.

Die Entlüftung erfolgt anfänglich mit einer sehr hohen Druckdifferenz zur Umgebung, welche während des Entlüftungsvorganges kontinuierlich abnimmt. Um eine möglichst kurze Entlüftungszeit zu realisieren müssen daher die Entlüftungsquerschnitte des Entlüftungsventils in geöffneter Stellung möglichst gross ausgebildet sein.

Die Aufgabe der vorliegenden Erfindung bestand darin, ein Entlüftungsventil zu finden, welches eine möglichst rasche Entlüftung des Druckbereiches von Streckblasmaschinen bei hohem Druckniveau resp. grossen Volumen erlaubt.

Diese Aufgabe wird erfindungsgemäss durch ein Entlüftungsventil mit den Merkmalen nach Anspruch 1 gelöst. Weitere, bevorzugte Ausführungsformen ergeben sich aus den Merkmalen der weiteren Ansprüche 2 bis 9.

Beim erfindungsgemässen Entlüftungsventil für den Einsatz in Streckblasmaschinen für die Fertigung von Hohlkörpern aus Kunststoff, mit einem axial in einem Ventilgehäuse zwischen einer geschlossenen und offenen Stellung verschiebbar angeordneten Ventilkörper, einen eine Speisedruckleitung und eine Entlüftungsleitung verbindenden Verbindungsraum, dessen Verbindung durch den Ventilkörper in seiner geschlossenen Stellung geschlossen ist, und einer Steuerdruckleitung, ist vorteilhaft der Ventilkörper aus einem Schliesskolben und einem damit starr verbundenen Gegenkolben gebildet. Dabei steht die eine erste Stirnseite des Ventilkörpers bildende Wirkfläche des Schliesskolbens mit der Steuerdruckleitung in Verbindung, und ist zwischen dem Schliesskolben und dem Gegenkolben ein Schliessteller ausgebildet, welcher den Verbindungsraum in geschlossener Stellung des Ventilkörpers schliesst. Dabei ist weiter die Wirkfläche des in den mit der Speisedruckleitung in Verbindung stehenden Bereiches des Verbindungsraum mündenden Teils des Gegenkolbens kleiner als die Wirkfläche des zum Gegenkolben gerichteten Teils des Schliesstellers in geschlossenem Zustand des Ventilkörpers, und die die genannte erste Stirnseite des Ventilkörpers bildende Wirkfläche des Steuerkolbens ist grösser als die genannte Wirkfläche des Schliesstellers.

Der grosse Vorteil dieser Anordnung liegt darin, dass durch die Anordnung des Gegenkolbens auch bei hohem Druck in der Speisedruckleitung der Ventilkörper mit einem vergleichsweise niedrigen Steuerdruck geschlossen gehalten werden kann. Dies wird dadurch erreicht, dass der Speisedruck über den Gegenkolben einen Schliessdruck auf den Ventilkörper resp. den Schliessteller ausübt und damit den Steuerkolben im Schliessen des Schliesstellers unterstützt. Sobald nun aber der Steuerdruck reduziert resp. abgeschaltet wird, erfolgt durch den Speisedruck eine Selbstöffnung des Entlüftungsventils, der auf die der Speisedruckleitung zugewandten Fläche des Schliesstellers einwirkt. Durch die Grössenverhältnisse zwischen dieser Wirkfläche des Schliesstellers und des Wirkfläche des Gegenkolbens wird eine resultierende Öffnungskraft auf den Schliessteller resp. den Ventilkörper ausgeübt, was zu einer sehr raschen Öffnung des Entlüftungsventils führt.

Vorzugsweise weist der Schliessteller weitere gegen den Verbindungsraum gerichtete Wirkflächen auf, welche in geschlossenem Zustand des Ventilkörpers im mit der Entlüftungsleitung verbundenen Bereich des Verbindungsraumes angeordnet sind. Damit wird die Öffnungskraft nach dem Öffnen des Ventilkörpers, d.h. dem Verschieben des Schliesstellers aus seiner geschlossenen Stellung in eine geöffnete Stellung und damit dem Öffnen des Verbindungsraumes zwischen der Speisedruckleitung und der Entlüftungsleitung, verstärkt. Die Öffnungskraft ist damit auch bei der Abnahme des Druckes in der Speisedruckleitung aufgrund der Öffnung des Ventils genüged gross, um das Entlüftungsventil offen zu halten.

Vorzugsweise ist der Schliessteller als zylindrischer Kolben ausgebildet. Diese Form kann besonders einfach und dennoch präzise hergestellt werden und bietet auch beste Verschlusseigenschafen.

In einer weiteren, bevorzugten Ausführungsform sind Steuerkolben und Gegenkolben als zylindrische Kolben ausgebildet. Damit kann ein Entlüftungsventil mit guten Dichteigenschaften hergestellt werden.

Vorzugsweise mündet die der ersten Stirnseite abgewandte Seite des Steuerkolbens in einen Schnaufraum mit Verbindung zur Umgebungsluft. Damit kann der Steuerkolben unter Beaufschlagung von Steuerdruck auf die erste Stirnseite des Ventilkörpers unbehindert und schnell den Ventilkörper in seine geschlossene Stellung verschieben. Damit wird der Schliessteller gegen seinen Ventilsitz gepresst und schliesst damit den Verbindungsraum dicht ab.

Vorzugsweise mündet die die zweite Stirnseite des Ventilkörpers bildende Wirkfläche des Gegenkolbens in einen weiteren Schnaufraum. Damit wird die durch den Steuerkolben bewirkte Verschliessbewegung des Ventilkörpers nicht behindert. Gegebenenfalls könnte anstelle des weiteren Schnaufraumes auch eine nach Aussen offene Öffnung oder Ausnehmung im Ventilgehäuse ausgebildet sein. Der Vorteil bei der Anordnung eines Schnaufraumes besteht darin, dass der Gegenkolben nicht durch von Aussen gegen die in diesem Raum liegenden Oberflächen einwirkenden Verunreinigungen verschmutzt wird oder Beschädigt wird.

Vorzugsweise weist in dieser Ausführung der Ventilkörper eine Verbindungsleitung zwischen der die andere Stirnseite des Ventilkörpers bildende Wirkfläche des Gegenkolbens und der der einen Stirnseite abgewandten Seite des Steuerkolbens auf. Damit weisen beide Schnaufräume, sowohl für den Steuerkolben wie auch für den Gegenkolben eine gemeinsame Leitung zur Umgebungsluft auf, welche beispielsweise mit einem Sieb oder entsprechenden Schutz gegen das Eindringen von Partikeln oder Fremdkörpern geschützt sein kann. Vorzugsweise ist die Verbindungsleitung in Form einer in der Längsachse des Ventilkörpers angeordneten Bohrung ausgeführt.

Vorzugsweise ist der Ventilkörper einteilig aufgebaut. Damit kann das Entlüftungsventil einfach und in herkömmlicher Weise aufgebaut sein und hergestellt werden.

Vorzugsweise weist der Schliessteller einen ringförmigen Kragen als Schliesselement auf. Damit erfolgt der dichte Ventilsitz über eine Ringfläche, welche entsprechend ausgebildet sein kann. Vorzugsweise weist der Kragen eine im Wesentlichen senkrecht zur Längsachse des Schliesskörpers stehende Schliessfläche auf. Damit wird die Wirkfläche des Schliesstellers nach einer ersten Öffnungsbewegung vergrössert und damit auch die Öffnungskraft erhöht oder bei reduziertem Druck nicht unmittelbar verringert. Selbstverständlich kann auch eine kegelförmige Schliessfläche ausgebildet sein.

Weiter wird e-rfindungsgemäss die Verwendung des erfindungsgemässen Entlüftungsventils in Streckblasmaschinen für das Entlüften von unter hohem Druck stehenden, fertig geblasenen PET-Flaschen beansprucht. Damit kann eine schnelle und zuverlässige Entlüftung des unter hohem Blasdruck stehenden Produktionsbereiches der Streckblasmaschinen gewährleistet werden und die Prozesszeit für die Herstellung einer PET-Flasche reduziert werden.

Ein Ausführungsbeispiel der vorliegenden Erfindung wird nachstehend anhand von Figuren noch näher erläutert. Es zeigen
Fig. 1 schematisch den Längsschnitt durch ein erfindungsgemässes Entlüftungsventil in geschlossener Stellung;
Fig. 2 den Längsschnitt des Entlüftungsventils nach Figur 1 in geöffneter Stellung;
Fig. 3 schematisch den Längsschnitt durch eine Ventilanordnung für eine Streckblasmaschine mit einem erfindungsgemäss ausgebildeten Entlüftungsventil.

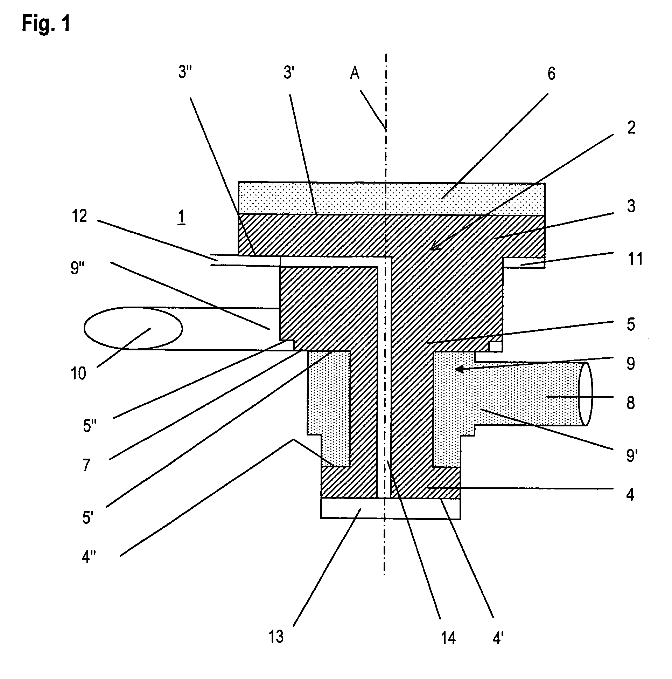

Figur 1 zeigt schematisch die Ansicht des Längsschnittes durch ein erfindungsgemäss aufgebautes Entlüftungsventil in der geschlossenen Stellung. Der in Gehäuse 1 entlang seiner Längsachse A verschiebbar angeordnete Ventilkörper 2 besteht im Wesentlichen aus drei Bereichen. Einem oben angeordneten Schliesskolben 3, einem unten angeordneten Gegenkolben 4 sowie einem dazwischen angeordnetem Schliessteller 5.

Der Ventilkörper 2 ist vorteilhaft einstückig als kreiszylindrischer Körper ausgebildet. Die obere Wirkfläche 3' des Schliesskolbens 3 bildet die erste resp. obere Stirnfläche des Ventilkörpers 2. Die Wirkfläche 3' mündet in einen Steuerdruckraum 6, welcher mit einer Steuerdruckleitung (in der Figur nicht dargestellt) verbunden ist. Wenn nun dieser Steuerdruckraum 6 mit Druck beaufschlagt wird, so wird der Ventilkörper 2 gegen unten in seine geschlossene Stellung verschoben und dort gehalten. Der untere, freie Bereich des Schliesskolbens 3. mündet in einen Schnaufraum 11, der über eine Leitung 12 mit der Umgebung in Verbindung steht. Damit wird der Schliessbewegung kein Widerstand entgegengesetzt und die Luft kann aus dem Schnaufraum 11 in die Umgebung entweichen.

Dabei kommt der Schliessteller 5 gegen den im Gehäuse 1 angeordneten resp. ausgebildeten Ventilsitz 7 in Anschlag und dichtet damit den mit der Speisedruckleitung 8 verbundenen Bereich 9' des Verbindungsraumes 9 gegen den mit der Entlüftungsleitung 10 verbundenen Bereich 9" ab.

Der Gegenkolben 4 mündet mit seiner oberen Wirkfläche 4' ebenfalls in den Bereich 9' des Verbindungsraumes 9. Die die zweite Stirnfläche des Ventilkörpers 2 bildende untere Wirkfläche 4" mündet vorteilhaft in einen weiteren Schnaufraum 13. Dieser Schnaufraum 13 ist ebenfalls mit der Umgebung verbunden, so dass auch hier kein Gegendruck entgegen der Schliessbewegung des Ventilköpers 2 entsteht.

Die Verbindung des Schnaufraumes 13 mit der Umgebung erfolgt vorteilhaft über eine Verbindungsleitung 14, welche im Ventilkörper 2 ausgebildet ist. Diese Verbindungsleitung 14 ist vorteilhaft durch eine zentral in der Achse A verlaufende Bohrung gebildet und mündet seitlich in den ersten Schnaufraum 11. Damit ist die Verbindung über die Leitung 12 mit der Umgebung gewährleistet.

Die gegen den Bereich 9' des Verbindungsraumes 9 gerichtete Wirkfläche 5' des Schliesstellers 5 ist mit dem in der Speisedruckleitung 8 herrschenden Druck beaufschlagt. Dieser Druck kann beim Fertigblasen von PET Kunststoffflaschen bis zu 40 bar betragen. Um der daraus resultierenden Öffnungskraft entgegen der Schliessrichtung des Ventilköpers 2 entgegenzuwirken, ist erfindungsgemäss der Gegenkolben 4 ausgebildet. Über die Wirkfläche 4' wird nämlich eine in Schliessrichtung des Ventilkörpers 2 wirkende Kraft erzeugt, so dass nur noch eine verhältnismässig geringe, auf den Ventilkörper 2 wirkende Öffnungskraft resultiert.

Indem die obere Wirkfläche 3' des Schliesskolbens 3 grösser ausgebildet ist, als die resultierende Wirkfläche aus der Differenz der oberen Wirkfläche 4' des Gegenkolbens 4 und der Wirkfläche 5' des Schliesstellers 5, kann der Steuerdruck wesentlich geringer ausfallen als die Spitze des Speisedruckes, um dennoch den Ventilkörper 2 zuverlässig in seiner geschlossenen Lage zu halten. Typischerweise kann mit einem Steuerdruck von 6 bar das Entlüftungsventil auch bei Speisedrücken von bis zu 40 bar zuverlässig geschlossen gehalten werden.

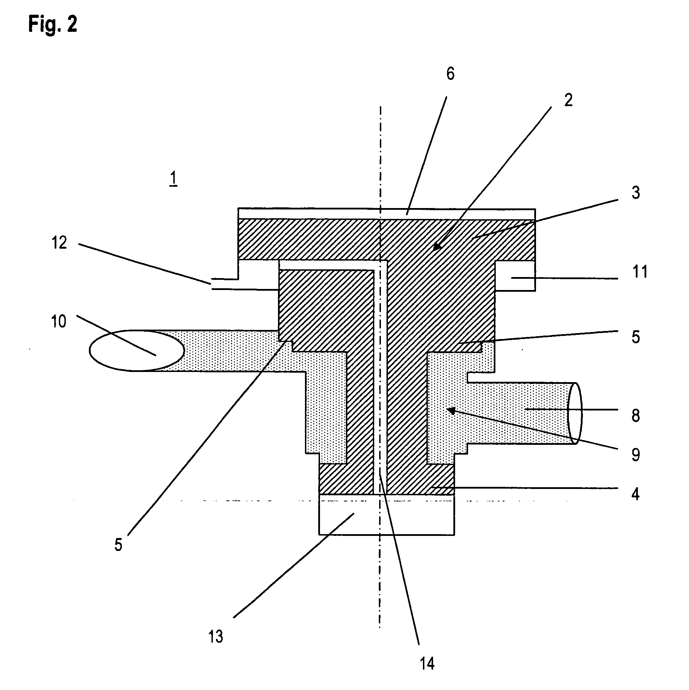

Wenn nun das Entlüftungsventil nach dem Abschluss des Blasprozesses geöffnet werden soll, so erfolgt dies, indem der Steuerdruck im Steuerdruckraum 6 reduziert resp. weggenommen wird, und damit der Ventilkörper 2 in seine in Figur 2 schematisch dargestellt geöffnete Position verschoben wird.

Indem der Schliessdruck wegfällt und damit die Schliesskraft reduziert wird oder gänzlich wegfällt, kann die aufgrund des Speisedruckes resultierende Öffnungskraft den Ventilköper 2 nach oben in die geöffnete Position verschieben.

Sobald sich der Schliessteller 5 vom Ventilsitz 7 löst, wird automatisch die Wirkfläche 5' des Schliesstellers 5 vergrössert und damit auch die Öffnungskraft-verstärkt. Da unmittelbar nach dem Öffnen des Schliesstellers 5 durch das Entweichen der Speiseluft der Speisedruck reduziert wird, wird durch die Vergrösserung der Wirkfläche 5' dieser Effekt auf die Öffnungskraft reduziert und eine noch genügende Öffnungskraft für die möglichst schnelle vollständige Öffnung des Ventilkörpers 2 beibehalten. Wenn der Schliessteller 5 vorzugsweise noch weitere, im Bereich 9" des Verbindungsraumes 9 ausgebildete Wirkflächen 5" aufweist, kann dieser Reduktionseffekt noch weiter vermindert werden. Damit können vorteilhaft sehr schnelle Öffnungszeiten des Ventilkörpers 2 von der geschlossenen in die vollständig geöffnete Position erzielt werden, womit der vollständige Öffnungsquerschnitt des Ventils sehr schnell erreicht wird und damit schliesslich auch eine sehr rasche vollständige Entlüftung der Speisedruckleitung erzielt wird.

Das Schliessen des Entlüftungsventils erfolgt anschliessend erneut durch Beaufschlagung des Steuerdruckraumes mit Steuerdruck. Da in dieser Phase der Speisedruck praktisch auf Umgebungsdruckniveau gefallen ist, erfolgt auch der Schliessvorgang praktisch ohne Gegendruck und damit ebenfalls sehr schnell.

Das erfindungsgemässe Entlüftungsventil weist damit vorteilhaft ein sehr schnelles Ansprechverhaltung und besonders kurze Öffnungs- und Schliesszeiten auf.

Ein Vorteil bei dieser Anordnung besteht weiter darin, dass keine Federelemente für die Unterstützung der Bewegung des Ventilkörpers 2 eingesetzt werden muss, wie dies häufig bei selbst schliessenden oder selbst öffnenden Ventilen der Fall ist. Damit entfällt auch das damit verbundene Ausfallrisiko im Falle eines Defektes dieser Federelemente. Sollte der Steuerdruck ausfallen, so öffnet das Ventil auch bei geringstem Speisedruck selbstständig und verhindert das gewollte oder ungewollte Einschliessen von Druckluft in der Anlage.

Insgesamt ergibt sich trotz der hohen Druckwerte und grossen Luftvolumen vorteilhaft eine sehr kompakte Bauweise des Entlüftungsventils, vergleichbar in der Grösse und dem Steuerdruckbedarf wie dasjenige der Blasventile für eine Fertigungsmaschine für PET Flaschen. Damit eignet sich das erfindungsgemässe Entlüftungsventil besonders gut für den Aufbau eines kompakten Ventilblockes für derartige Fertigungsmaschinen.

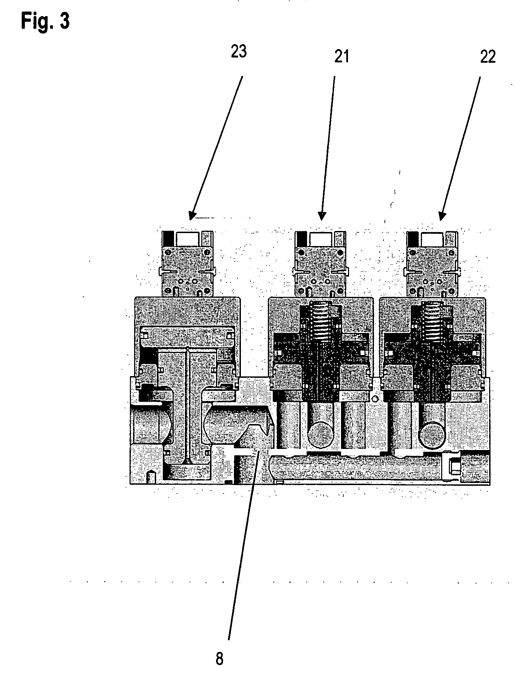

In Figur 3 ist schematisch eine derartige Anordnung in Form eines Ventilblockes 20 dargestellt. Auf der rechten Seite des Ventilblockes 20 sind das Vorblasventil 21 und das Hauptblasventil 22 dargestellt, welche die gemeinsame Speisedruckleitung 8 mit entsprechender Druckluft versorgen. Am gleichen Ventilblock 20 ist auf der linken Seite ein erfindungsgemäss ausgestaltetes Entlüftungsventil 23 angeordnet, welches wie oben dargestellt die Speisedruckleitung- 8 in kurzer Zeit zu entlüften vermag.

## Patentansprüche

1. Entlüftungsventil für den Einsatz in Streckblasmaschinen für die Fertigung von Hohlkörpern aus Kunststoff, mit einem axial in einem Ventilgehäuse (1) zwischen einer geschlossenen und offenen Stellung verschiebbar angeordneten Ventilkörper (2), einen eine Speisedruckleitung (8) und eine Entlüftungsleitung (10) verbindenden Verbindungsraum (9), dessen Verbindung durch den Ventilkörper (2) in seiner geschlossenen Stellung geschlossen ist, und einer Steuerdruckkammer (6), **dadurch gekennzeichnet, dass** der Ventilkörper (2) aus einem Schliesskolben (3) und einem damit starr verbundenen Gegenkolben (4) gebildet ist, wobei die eine erste Stirnseite des Ventilkörpers (2) bildende Wirkfläche (3') des Schliesskolbens (3) mit der Steuerdruckkammer (6) in Verbindung steht, und wobei zwischen dem Schliesskolben (3) und dem Gegenkolben (4) ein Schliessteller (5) ausgebildet ist, welcher den Verbindungsraum (9) in geschlossener Stellung des Ventilkörpers (2) schliesst, und wobei die Wirkfläche (4'') des in den mit der Speisedruckleitung (8) in Verbindung stehenden Bereiches (9') des Verbindungsraums (9) mündenden Teils des Gegenkolbens (4) kleiner ist als die Wirkfläche (5') des zum Gegenkolben (4) gerichteten Teils des Schliesstellers (5) in geschlossenem Zustand des Ventilkörpers (2), und wobei die die genannte erste Stirnseite des Ventilkörpers (2) bildende Wirkfläche (3') des Steuerkolbens (3) grösser ist als die genannte Wirkfläche (5') des Schliesstellers (5).

2. Entlüftungsventil nach Anspruch 1, **dadurch gekennzeichnet, dass** der Schliessteller (5) weitere gegen den Verbindungsraum (9) gerichtete Wirkflächen (5'') aufweist, welche in geschlossenem Zustand des Ventilkörpers (2) im mit der Entlüftungsleitung (10) verbundenen Bereich (9'') des Verbindungsraumes (9) angeordnet sind.

3. Entlüftungsventil nach Anspruch 1 oder 2, **dadurch gekennzeichnet, dass** der Schliessteller (5) als zylindrischer Kolben ausgebildet ist.

4. Entlüftungsventil nach einem der Ansprüche 1 bis 3, **dadurch gekennzeichnet, dass** Steuerkolben (3) und Gegenkolben (4)- als zylindrische Kolben ausgebildet sind.

5. Entlüftungsventil nach einem der Ansprüche 1 bis 4, **dadurch gekennzeichnet, dass** die der ersten Stirnseite (3') abgewandte Seite (3") des Steuerkolbens (3) in einen Schnaufraum (11) mit Verbindung zur Umgebungsluft mündet.

6. Entlüftungsventil nach einem der Ansprüche 1 bis 5, **dadurch gekennzeichnet, dass** die die zweite Stirnseite des Ventilkörpers (2) bildende Wirkfläche (4') des Gegenkolbens (4) in einen weiteren Schnaufraum (13) mündet.

7. Entlüftungsventil nach Anspruch 6, **dadurch gekennzeichnet, dass** der Ventilkörper (2) eine Verbindungsleitung (14) zwischen der die zweite Stirnseite des Ventilkörpers (2) bildende Wirkfläche (4') des Gegenkolbens (4) und der der ersten Stirnseite abgewandten Seite (3'') des Steuerkolbens (3) aufweist, vorzugsweise in Form einer in der Längsachse (A) des Ventilkörpers (2) angeordneten Bohrung.

8. Entlüftungsventil nach einem der Ansprüche 1 bis 7, **dadurch gekennzeichnet, dass** der Ventilkörper (2) einteilig aufgebaut ist.

9. Entlüftungsventil nach einem der Ansprüche 1 bis 8, **dadurch gekennzeichnet, dass** der Schliessteller (5) einen ringförmigen Kragen (7) als Schliesselement aufweist, vorzugsweise mit im Wesentlichen senkrecht zur Längsachse des Schliesskörpers (2) stehender Schliessfläche.

10. Verwendung eines Entlüftungsventils nach einem der Ansprüche 1 bis 9 in Streckblasmaschinen für das Entlüften von unter hohem Druck stehenden, fertig geblasenen PET-Flaschen.
